# EUROPÄISCHE PATENTSCHRIFT

(11) **EP 3 154 277 B1**
(45) Veröffentlichungstag und Bekanntmachung des Hinweises auf die Patenterteilung: **28.11.2018**
(21) Anmeldenummer: 16189567.7
(22) Anmeldetag: 20.09.2016
(51) Int. Cl.: H04R 25/00, H04S 7/00, G01P 21/00

(54) **VERFAHREN ZUM BETRIEB EINER HÖRVORRICHTUNG UND HÖRVORRICHTUNG**
METHOD FOR OPERATING A HEARING AID AND HEARING AID
PROCÉDÉ DE FONCTIONNEMENT D'UNE AIDE AUDITIVE ET AIDE AUDITIVE

(30) Priorität: 09.10.2015 DE 102015219572
(43) Veröffentlichungstag der Anmeldung: 12.04.2017
(73) Patentinhaber: Sivantos Pte. Ltd., Singapore 539775 (SG)
(72) Erfinder: MAULER, Dirk, 91054 Buckenhof (DE)
(74) Vertreter: FDST Patentanwälte

(56) Entgegenhaltungen:
- EP-A1- 0 744 622
- EP-A1- 2 928 210
- DE-A1- 10 007 600
- DE-A1-102012 214 081
- US-A1- 2008 288 200
- US-A1- 2009 097 683
- US-A1- 2015 230 036

## Beschreibung

Die Erfindung betrifft ein Verfahren zum Betrieb einer binauralen Hörvorrichtung. Desweiteren betrifft die Erfindung eine entsprechende binaurale Hörvorrichtung.

Eine Hörvorrichtung ist beispielsweise aus der DE 10 2006 028 682 A1 bekannt. Weiterhin ist in der EP 2 928 210 A1 eine binaurale Hörvorrichtung mit einer Rauschreduktion beschrieben.

Hörvorrichtungen dienen üblicherweise der Aufnahme und Verstärkung von Schall und dessen Ausgabe an einen zumeist hörgeschädigten Anwender. Die Hörvorrichtung weist dazu ein oder zwei Hörgeräte auf, die jeweils mit zumindest einem Mikrofon und einem Hörer ausgestattet sind sowie mit einer geeigneten Signalverarbeitungseinheit zur Verstärkung oder allgemein zur Modifizierung des aufgenommenen Schalls vor der Ausgabe.

Die Hörvorrichtung wird vom Anwender im Wesentlichen permanent getragen, üblicherweise am Kopf und in der Nähe der Ohren. Die Hörgeräte sind dann beispielsweise als BTE-Geräte ausgebildet, welche hinter dem Ohr getragen werden, oder als ITE-Geräte, welche im Ohr getragen werden.

Die Hörvorrichtung weist zudem üblicherweise eine Anzahl von Betriebsparametern auf, welche insbesondere das Verhalten der Signalverarbeitungseinrichtung und somit die Modifizierung des aufgenommenen Schalls bestimmen. Ein Beispiel für solch einen Betriebsparameter ist der Verstärkungsfaktor, mit welchem der aufgenommene Schall verstärkt wird. Ein weiteres Beispiel ist die Dimensionierung einer Richtkeule des Hörsystem, zur Anpassung einer Richtcharakteristik in unterschiedlichen Situationen. Grundsätzlich soll in jeglicher Geräuschsituation die Hörvorrichtung möglichst optimal eingestellt sein, wobei in unterschiedlichen Geräuschsituationen oftmals auch unterschiedliche Werte für die Betriebsparameter sinnvoll sind.

Die in der DE 10 2006 028 682 A1 beschriebene Hörvorrichtung ist mit einem Sensor ausgestattet, welcher in einer Ausgestaltung zur Erfassung einer Orientierung oder Lage der Hörvorrichtung in ihrer Umgebung ausgebildet ist. Dadurch lässt sich die Richtcharakteristik der Hörvorrichtung steuern. Dreht der Anwender der Hörvorrichtung seinen Kopf über eine gewisse Zeit leicht auf eine bestimmte Seite, so wird angenommen, dass er bevorzugt Signale von dieser Seite empfangen will und die Richtkeule wird daraufhin in die entsprechende Richtung gedreht.

Vor diesem Hintergrund ist es eine Aufgabe der Erfindung, ein Verfahren zum Betrieb einer Hörvorrichtung anzugeben, bei welchem die Ermittlung der Orientierung verbessert, d.h. insbesondere genauer ist. Weiterhin soll eine entsprechende Hörvorrichtung angegeben werden, die zudem im Betrieb möglichst wenig Energie verbraucht und möglichst kompakt sein soll.

Die Aufgabe wird erfindungsgemäß gelöst durch ein Verfahren mit den Merkmalen gemäß Anspruch 1 sowie durch eine Hörvorrichtung mit den Merkmalen gemäß Anspruch 9. Vorteilhafte Ausgestaltungen, Weiterbildungen und Varianten sind Gegenstand der Unteransprüche. Dabei gelten die Ausführungen und Vorteile im Zusammenhang mit dem Verfahren sinngemäß auch für die Hörvorrichtung und umgekehrt.

Das Verfahren dient zum Betrieb einer Hörvorrichtung, die insbesondere eine Anzahl von Mikrofonen aufweist, zur Aufnahme von Schall, d.h. insbesondere Geräuschen, sowie insbesondere zumindest einen Hörer, zur Ausgabe des aufgenommenen Schalls an einen Anwender der Hörvorrichtung. Diese weist zudem zwei Beschleunigungssensoren auf, die jeweils ein Sensorsignal bereitstellen und mittels derer bei dem Verfahren eine Orientierung des Kopfes, d.h. insbesondere die ungefähre Blickrichtung eines Anwenders der Hörvorrichtung ermittelt wird. Dabei werden zur Ermittlung der Orientierung die Sensorsignale beider Beschleunigungssensoren kombiniert verwendet. Unter "kombiniert verwendet" wird insbesondere verstanden, dass die Sensorsignale der beiden Beschleunigungssensoren in Kombination verwendet werden und gerade nicht separat voneinander. Die Ermittlung der Orientierung erfolgt demnach anhand der Sensorsignale beider Beschleunigungssensoren, um aus einer Gesamtbetrachtung ebenjener Sensorsignale die Orientierung des Kopfes abzuleiten. Die Sensorsignale beider Beschleunigungssensoren werden insofern insbesondere gleichzeitig verwendet und verwertet. In Abhängigkeit der Orientierung wir schließlich ein Betriebsparameter der Hörvorrichtung eingestellt. Dabei ist insbesondere die Ausgabe des aufgenommenen Schalls über den Hörer vom Betriebsparamater abhängig, d.h. durch Einstellen des Betriebsparameters wird konkret die Ausgabe der Hörvorrichtung verändert.

Ein wesentlicher Vorteil der Erfindung besteht insbesondere darin, dass durch Verwendung zweier Beschleunigungssensoren auch solche Typen von Beschleunigungssensoren verwendet werden können, die bei ansonsten einfacher oder lediglich separater Verwendung nur ungenaue Messergebnisse liefern würden, durch die kombinierte Verwendung mehrerer Beschleunigungssensoren jedoch ein genaueres Messergebnis liefern. Dem liegt der Gedanke zugrunde, dass bei kombinierter Verwendung der Sensorsignale mehrerer Beschleunigungssensoren im Vergleich zur separaten Verwendung dieser Sensorsignale zusätzliche Informationen gewonnen werden, welche mögliche Ungenauigkeiten und/oder Messfehler reduzieren.

Das Verfahren ist grundsätzlich auch zum Betrieb einer Hörvorrichtung geeignet, die keine Mikrofone und/oder Hörer aufweist, wie beispielsweise ein Kopfhörer und daher nicht auf Hörvorrichtungen zur Versorgung von Hörgeschädigten beschränkt.

Als Beschleunigungssensoren im Zusammenhang mit einer Hörvorrichtung sind sogenannte translatorische Beschleunigungssensoren verwendbar, deren Sensorsignale üblicherweise durch die Erdbeschleunigung beeinflusst sind. Die im Anwendungsbereich der Hörvorrichtung zu erwartenden Translationen des Kopfes würden bei einem translatorischen Beschleunigungssensor insbesondere lediglich zu einem im Vergleich zur Erdbeschleunigung geringen Signalanteil am gesamten Sensorsignal führen, sodass das Sensorsignal eines einzelnen Beschleunigungssensors mit einer großen Unsicherheit bezüglich der Orientierung behaftet ist. Die Erdbeschleunigung führt also zu einer Beeinträchtigung der Genauigkeit. Diese Beeinträchtigung lässt sich dann aber auf vorteilhafte Weise durch die kombinierte Verwendung der beiden Sensorsignale zweier Beschleunigungssensoren eliminieren oder auch herausfiltern oder zumindest hinreichend abschwächen.

Entsprechend wird vorliegend mittels der Beschleunigungssensoren jeweils eine translatorische Beschleunigung gemessen, d.h. allgemein insbesondere ermittelt. Mit anderen Worten: die beiden Beschleunigungssensoren sind bevorzugt translatorische Beschleunigungssensoren. Diese zeichnen sich insbesondere gegenüber rotatorischen Beschleunigungssensoren, sogenannten gyroskopischen Beschleunigungssensoren, durch einen deutlich geringeren Energiebedarf aus und sind daher besonders zur Verwendung bei einer üblicherweise batteriebetriebenen Hörvorrichtung geeignet. Zudem beanspruchen translatorische Beschleunigungssensoren regelmäßig auch weniger Bauraum als typische rotatorische Beschleunigungssensoren und sind daher auch hinsichtlich des generell stark eingeschränkten Bauraumes bei einer Hörvorrichtung besonders zur Verwendung in einer solchen geeignet. Insgesamt sind translatorische Beschleunigungssensoren gegenüber anderen Beschleunigungssensoren besonders energieeffizient und kompakt und werden daher bevorzugt bei einer in dieser Hinsicht typischerweise anspruchsvollen Hörvorrichtung verbaut.

Ein translatorischer Beschleunigungssensor umfasst üblicherweise eine Testmasse, welche sich bei einer Beschleunigung bewegt und dabei eine Kraft beispielsweise auf einen Hebelarm ausübt. Die Kraft wird dann gemessen und einer bestimmten Beschleunigung zugeordnet. Die Beschleunigung wird dabei typischerweise in einem kartesischen Koordinatensystem mit drei Achsen, die insbesondere zueinander senkrecht stehen, gemessen, also in einer X-, einer Y- und einer Z-Richtung. Bei der Bestimmung einer Drehbewegung, wie im Falle einer Änderung der Orientierung des Kopfes, ergeben sich dann aufgrund der üblicherweise festen Anordnung relativ zum Kopf je nach Ausrichtung des Sensors entsprechende Beschleunigungen in einer radialen Richtung, d.h. auf eine Drehachse des Kopfes zu oder von dieser wegweisend, und/oder in tangentialer Richtung, d.h. orthogonal zur Drehachse und in einem Abstand zu dieser. Ein translatorischer Beschleunigungssensor erfasst demnach radiale und/oder tangentiale Beschleunigungen, welche entsprechend einen Eingang in das vom Beschleunigungssensor ausgegebene Sensorsignal finden.

Aus dem Sensorsignal wird mittels einer geeigneten Steuereinheit die Orientierung ermittelt, insbesondere errechnet. Die Orientierung gibt eine Ausrichtung des Kopfes bezüglich einer festen Bezugsrichtung an, vorzugsweise bezüglich der Erdbeschleunigung. Die Orientierung des Kopfes ist durch eine Anzahl von Parametern vollständig bestimmt, insbesondere durch drei Winkel relativ zur Bezugsrichtung, beispielsweise einen Drehwinkel um eine Drehachse für die Links-rechts-Drehung, kurz Drehung des Kopfes, einen Kippwinkel um eine Kippachse für das seitliche Neigen oder Links-rechts-Kippen, kurz Kippen des Kopfes und einen Nickwinkel um eine Nickachse für das Vor-zurück-Nicken, kurz Nicken des Kopfes. Die Orientierung ist damit durch einen Orientierungsvektor gegeben, welcher die Parameter enthält und die Orientierung des Kopfes relativ zur Bezugsrichtung insbesondere eindeutig beschreibt. Insbesondere entspricht die Orientierung einer Richtung, welche zugleich eine Blickrichtung des Anwenders ist, sofern der Anwender bezüglich seiner Gesichtsebene frontal nach vorne schaut. Schaut der Anwender nach vorn und ist dessen Blickrichtung senkrecht zur Erdbeschleunigung, dann betragen alle drei Winkel 0°, insbesondere insofern als dass die Richtung der Erdbeschleunigung als eine Bezugsrichtung gewählt ist. Auch die Sensorsignale sind zweckmäßigerweise jeweils durch einen Signalvektor repräsentiert und geben dann eine vom jeweiligen Beschleunigungssensor ermittelte Beschleunigung an, welche insbesondere im Bezugssystem des Beschleunigungssensors ausgedrückt ist.

Die Steuereinheit ermittelt die Orientierung ausgehend vom Sensorsignal insbesondere mittels einer Differentialgleichung, in welcher die Sensorsignale und somit die radialen und/oder tangentialen Beschleunigungen als Eingangsparameter verwendet werden. Die hierbei durchgeführte insbesondere numerische Integration ist typischerweise besonders anfällig für Störungen oder Unsicherheiten des Sensorsignals. Eine besondere Schwierigkeit liegt hier im Einfluss der Erdbeschleunigung, welche insbesondere betragsmäßig häufig größer ist als die radiale und/oder translatorische Beschleunigung bei einer Dreh-, Kipp- oder Nickbewegung des Kopfes und daher potentiell zu Messfehlern führt, welche eine genaue Berechnung der Orientierung verhindern. Insbesondere ist die Erdbeschleunigung eine Ursache eines permanent vorhandenen Hintergrundsignals, welches dann als ein ungewollter Signalanteil in den Sensorsignalen enthalten ist. Lediglich im Falle einer Drehung um eine Drehachse, welche mit der Richtung der Erdbeschleunigung exakt übereinstimmt, hätte die Erdbeschleunigung in radialer und in tangentialer Richtung keinen Einfluss auf die Messung. Dieser Fall ist jedoch höchstens von nachgeordneter Bedeutung, da die Drehachse in den praktisch relevanten Fällen typischerweise nicht exakt mit der Richtung der Erdbeschleunigung übereinstimmt.

Die Kombination mehrerer Sensorsignale mehrerer Beschleunigungssensoren ermöglicht jedoch eine genauere Berechnung der Orientierung durch eine deutliche Reduzierung der Ungenauigkeit der Berechnung. Dazu werden die beiden Sensorsignale zu einem Gesamtsignal kombiniert, mittels dessen dann die Orientierung des Kopfes ermittelt wird. Bei der Kombination zum Gesamtsignal werden diejenigen Messfehler und Hintergrundsignale, welche für beide Beschleunigungssensoren insbesondere gleichermaßen auftreten, auf vorteilhafte Weise eliminiert und es verbleibt ein reines Nutzsignal als Gesamtsignal, welches insbesondere lediglich aus radialen und/oder tangentialen Beschleunigungen zusammengesetzt ist, die durch die Bewegung des Kopfes verursacht wurden. Bei der Berechnung der Orientierung werden dann nicht die Sensorsignale verwendet, sondern das Gesamtsignal. Die Kombination zum Gesamtsignal ermöglicht hierbei eine verbesserte Ermittlung, d.h. insbesondere Berechnung der Orientierung. Dieser Vorteil kommt besonders bei der Verwendung von translatorischen Beschleunigungssensoren zum Tragen, welche einzeln verwendet höchstens lediglich eine ungenaue Bestimmung der Orientierung ermöglichen, insbesondere ungenauer im Vergleich zu rotatorischen Beschleunigungssensoren.

Die Kombination zum Gesamtsignal erfolgt durch eine mathematische Operation, d.h. der Zusammenfassung der beiden Sensorsignale mittels eines mathematischen Operators. Besonders geeignet ist hier eine additive Kombination, insbesondere eine Subtraktion, und zwar derart, dass ein Messfehler oder Hintergrundsignal, welcher bzw. welches in beiden Sensorsignalen enthalten ist, gerade eliminiert wird.

Besonders vorteilhaft wird die Kombination der Sensorsignale zum Gesamtsignal eingesetzt, um einen Erdbeschleunigungsanteil in den Sensorsignalen zu eliminieren. Mit anderen Worten: die beiden Sensorsignale weisen jeweils einen Erdbeschleunigungsanteil auf und werden derart zum Gesamtsignal kombiniert, dass die Erdbeschleunigungsanteile eliminiert werden und das Gesamtsignal unabhängig von der Erdbeschleunigung ist. Auf diese Weise ist dann die Erdbeschleunigung als wesentliche Unsicherheits- und Fehlerquelle sowie als Hintergrundsignal bei der Bestimmung der Orientierung des Kopfes auf besonders effiziente Weise eliminiert. Durch Kombination der beiden Sensorsignale, insbesondere durch eine Subtraktion des einen der Sensorsignale vom anderen Sensorsignal werden die radialen und/oder tangentialen Beschleunigungen aufgrund einer bestimmten Orientierung des Kopfes im Gesamtsignal konstruktiv, d.h. insbesondere additiv zusammengefasst, wohingegen die Erdbeschleunigungsanteile, d.h. erdbeschleunigungsabhängige Signalanteile destruktiv kombiniert werden und das Gesamtsignal dann frei von einem Erdbeschleunigungsanteil ist. Insgesamt werden also auf vorteilhafte Weise die Sensorsignale insbesondere mittels einer Differenzsignalbildung zum Gesamtsignal kombiniert und dadurch erdbeschleunigungsabhängige Signalanteile eliminiert, d.h. entfernt.

Vorliegend erfolgt die Verwendung zweier Beschleunigungssensoren zur Bestimmung der Orientierung des Kopfes bei einer als binaurale Hörvorrichtung ausgebildeten Hörvorrichtung. Diese weist zwei Hörgeräte auf, nämlich ein linkes und ein rechtes Hörgerät, zum Tragen auf unterschiedlichen Seiten des Kopfes, nämlich auf einer linken Seite und auf einer rechten Seite bezüglich der Blickrichtung. Jeweils einer der beiden Beschleunigungssensoren ist dann in oder an jeweils einem der beiden Hörgeräte angebracht, d.h. der eine der Beschleunigungssensoren ist links des Kopfes positioniert und der andere Beschleunigungssensor rechts des Kopfes, sodass die beiden Sensorsignale als ein linkes Sensorsignal und ein rechtes Sensorsignal bereitgestellt werden. Diese Anordnung führt zu besonderen Vorteilen bei der gemeinsamen Verwertung der Sensorsignale zwecks Ermittlung der Orientierung: da die Beschleunigungssensoren auf unterschiedlichen Seiten des Kopfes angebracht sind, erfahren diese bei einer Drehbewegung, d.h. beim Drehen, Kippen oder Nicken, jeweils eine Beschleunigung in unterschiedlichen Richtungen, wohingegen die Erdbeschleunigung für beide Beschleunigungssensoren in die gleiche Richtung erfolgt. Dadurch ist diese Anordnung besonders zur Eliminierung erdbeschleunigungsabhängiger Signalanteile mittels Differenzbildung, also der Subtraktion der Sensorsignale voneinander, geeignet. Beispielsweise wird bei einer Drehung des Kopfes nach links durch diese Drehung der linke Beschleunigungssensor bezüglich des Anwenders nach hinten beschleunigt und der rechte Beschleunigungssensor nach vorn, während beide aufgrund der Erdbeschleunigung ebenfalls nach unten beschleunigt werden. Bei einer Differenzbildung der Sensorsignale werden dann diejenigen Signalanteile addiert, welche durch das Drehen, Kippen oder Nicken bedingt sind, während die erdbeschleunigungsbedingten Signalanteile subtrahiert werden.

Das jeweilige Sensorsignal ist von der konkreten Ausrichtung des jeweiligen Beschleunigungssensors abhängig. Um eine möglichst optimale Kombination insbesondere zwecks Eliminierung der erdbeschleunigungsabhängigen Signalanteile zu erzielen, sind die beiden Beschleunigungssensoren zweckmäßigerweise derart ausgerichtet, dass auf diese die Erdbeschleunigung gleichermaßen wirkt und beide Sensorsignale dann auch gleiche erdbeschleunigungsabhängige Signalanteile aufweisen. Je nach Einbausituation der Beschleunigungssensoren an unterschiedlichen Stellen der Hörvorrichtung ist eine solche exakt gleiche Ausrichtung jedoch nicht notwendigerweise gegeben. Auch ist es insbesondere bei einer binauralen Hörvorrichtung unter Berücksichtigung der individuellen Kopfform eines jeweiligen Anwenders und der Trageweise der Hörvorrichtung durch den Anwender möglich, dass die beiden Beschleunigungssensoren relativ zueinander eine Schieflage aufweisen, welche eine optimale, d.h. vollständige Eliminierung von Messfehlern und unerwünschten, insbesondere erdbeschleunigungsabhängigen Signalanteilen verhindert. Zweckmäßigerweise wird daher eine solche Schieflage der Beschleunigungssensoren zueinander kompensiert. Die Schieflage ist dabei insbesondere eine relative Ausrichtung der Bezugssysteme der Beschleunigungssensoren und insbesondere von konstruktiv bedingten Vorzugsrichtungen der Beschleunigungssensoren, beispielsweise einer bestimmten Ausrichtung einer Aufhängung für die Testmasse. Die Kompensation der Schieflage erfolgt insbesondere mittels der Steuereinheit und gerade nicht durch mechanische oder physische Neuanordnung der Beschleunigungssensoren oder einer Neuausrichtung der Hörgeräte einer binauralen Hörvorrichtung. Zudem erfolgt die Kompensation insbesondere noch bevor die Sensorsignale zum Gesamtsignal kombiniert werden.

In einer ersten Variante erfolgt die Kompensation der Schieflage nach einem Anbringen der Hörvorrichtung am Kopf des Anwenders und dann beispielsweise bei einem nachfolgenden Einschaltvorgang. Auf diese Weise ist gewährleistet, dass nach einem Abnehmen und einem erneuten Aufsetzen der Hörvorrichtung insbesondere automatisch eine möglicherweise nun andere Schieflage optimal ausgeglichen, d.h. kompensiert wird. Alternativ oder zusätzlich erfolgt die Kompensation auch durch eine Nutzereingabe, beispielsweise durch Betätigen eines Bedienelements, beispielsweise eines Schalters.

In einer geeigneten Ausgestaltung wird die Schieflage kompensiert, indem zumindest eines der Sensorsignale zusätzlich transformiert wird. Dadurch wird dann insbesondere die Vorzugsrichtung des einen der Beschleunigungssensoren quasi virtuell mit der Vorzugsrichtung des anderen Beschleunigungssensors zur Deckung gebracht. In mathematischer Hinsicht weisen die beiden Sensorsignale aufgrund der Schieflage zunächst unterschiedliche Bezugssysteme auf, die dann durch Transformation beispielsweise mittels einer Rotationsmatrix in Übereinstimmung gebracht werden, d.h. die jeweiligen individuellen X-, Y- und Z-Richtungen werden zueinander ausgerichtet, insbesondere paarweise parallel zueinander. Dazu wird insbesondere das eine der Sensorsignale, genauer gesagt dessen Signalvektor mit der Rotationsmatrix transformiert, d.h. hier insbesondere multipliziert, um den Signalvektor in das Bezugssystem des anderen Sensorsignals zu überführen. Alternativ werden die Sensorsignale als Quaternionen ausgedrückt und mittels einer geeigneten mathematischen Operation transformiert. Grundsätzlich erfolgt die Transformation mittels einer mathematischen Operation.

Insbesondere zur Parametrisierung, d.h. zur Bestimmung von Matrixparametern der Rotationsmatrix, aber auch allgemein im Zusammenhang mit der Kompensation der Schieflage, wird zweckmäßigerweise eine Eichmessung durchgeführt, bei welcher ein Langzeitmittelwert des jeweiligen Sensorsignals ermittelt wird. Mit anderen Worten: es wird für beide Sensorsignale jeweils ein Langzeitmittelwert gebildet, d.h. ein zeitlicher Mittelwert über einen Zeitraum von etwa 1 bis 10 s, und diese Langzeitmittelwerte werden für eine Eichmessung zur Kompensation der Schieflage verwendet. Dem liegt der Gedanke zugrunde, dass ein Sensorsignal über einen hinreichend langen Zeitraum gemittelt im Wesentlichen durch die Erdbeschleunigung bestimmt ist und auf diese Weise dann abhängig vom tatsächlichen Langzeitmittelwert im Vergleich zum vorbekannten Wert der Erdbeschleunigung die Ausrichtung des Beschleunigungssensors relativ zur Erdbeschleunigung verwendet werden kann. Entsprechend werden daher bei der Eichmessung die Langzeitmittelwerte zur Eichung der Beschleunigungssensoren verwendet, indem zunächst die individuelle Schieflage eines jeweiligen Beschleunigungssensors relativ zur Erdbeschleunigung ermittelt wird und anschließend die beiden individuellen Schieflagen zur Bestimmung der Schieflage der beiden Beschleunigungssensoren zueinander verwendet werden. Die Eichmessung wird zweckmäßigerweise immer dann ausgeführt, wenn sich die Ausrichtung der Beschleunigungssensoren zueinander geändert hat, also beispielsweise nach dem Ablegen und wieder Aufsetzen der Hörgeräte einer binauralen Hörvorrichtung. Dazu wird die Eichmessung beispielsweise automatisch beim Einschalten der Hörvorrichtung durchgeführt oder auch im Betrieb durch eine Eingabe oder eine Anweisung des Anwenders ausgelöst. In einer geeigneten Alternative dazu wird die Eichmessung im laufenden Betrieb kontinuierlich durchgeführt, d.h. insbesondere durch eine kontinuierliche oder regelmäßige Mittelung im Betrieb.

Die ermittelte Orientierung des Kopfes ermöglicht insbesondere zusätzlich zu einer herkömmlichen Steuerung, beispielsweise über Bedienelemente an der Hörvorrichtung, eine automatische Steuerung der Hörvorrichtung in Abhängigkeit der aktuellen Orientierung und allgemein auch in Abhängigkeit der Bewegung des Kopfes. Dabei wird zur Steuerung der Hörvorrichtung dann ein Betriebsparameter ebenjener Hörvorrichtung in Abhängigkeit von der Orientierung eingestellt. In einer ersten Variante ist dadurch eine Steuerung der Hörvorrichtung durch Kopfbewegungen oder Kopfgesten des Anwenders ermöglicht, sodass dieser bedarfsweise Einstellungen vornehmen kann, ohne separate Bedienelemente bedienen zu müssen. In einer zweiten Variante wird die Orientierung alternativ oder zusätzlich direkt, d.h. insbesondere ohne eine explizite Nutzereingabe, zur Einstellung der Hörvorrichtung verwendet, insbesondere in Kombination mit einer Klassifikation, beispielsweise einer Klassifikation einer Geräuschsituation, in welcher sich der Anwender gerade befindet, um dann die Orientierung sozusagen als Zusatzinformation bei der Klassifizierung zu verwerten.

Grundsätzlich sind Hörvorrichtungen bekannt, die eine Richtcharakteristik derart aufweisen, dass die Hörvorrichtung solchen Schall, der von einer Schallquelle aus einer bestimmten Richtung stammt gegenüber Schall aus anderen Richtungen hervorhebt. Dazu werden üblicherweise mehrere Mikrofone in Kombination mit einem sogenannten Beamformingverfahren verwendet. Dabei wird eine Richtkeule ausgebildet, die durch eine Ausrichtung und eine Abmessung charakterisiert ist, und diese Richtkeule auf eine bestimmte Schallquelle ausgerichtet, um gezielt ebendiese Schallquelle hervorzuheben. Häufig ist die Richtkeule zunächst nach vorn und in einer Blickrichtung des Anwenders ausgerichtet. Zur verbesserten Einstellung einer solchen Richtkeule wird vorteilhafterweise die Orientierung des Kopfes des Anwenders herangezogen. Mit anderen Worten: vorteilhafterweise weist die Hörvorrichtung eine Richtkeule auf, zur gerichteten Aufnahme von Schall mittels einer Anzahl von Mikrofonen, und der Betriebsparameter, welcher in Abhängigkeit der Orientierung eingestellt wird, ist eine Abmessung oder eine Ausrichtung der Richtkeule.

In einer besonders geeigneten Ausgestaltung ist der Betriebsparameter eine Abmessung der Richtkeule, insbesondere eine Breite, und diese Abmessung wird reduziert, falls der Anwender während eines vorgegebenen Zeitintervalls die Orientierung seines Kopfes nicht ändert. Bleibt also die Orientierung über einen bestimmten Zeitraum, beispielsweise mehrere Sekunden in etwa unverändert, so wird davon ausgegangen, dass der Anwender seine Aufmerksamkeit auf eine aktuell ausgewählte Schallquelle fokussieren will. Die Breite der Richtkeule wird dann verringert, um eine entsprechende Fokussierung zu realisieren und dadurch andere Schallquellen in verbesserter Weise auszublenden oder abzuschwächen.

Entsprechend wird in einer weiteren geeigneten Ausgestaltung die Abmessung vergrößert, falls der Anwender die Orientierung seines Kopfes ändert. In diesem Fall wird darauf geschlossen, dass der Anwender entweder seine Aufmerksamkeit von der aktuell ausgewählten Schallquelle abziehen will oder alternativ, dass die aktuelle Schallquelle relativ zum Anwender in Bewegung ist und entsprechend verfolgt werden soll. In jedem Fall führt eine Vergrößerung, insbesondere Verbreiterung der Richtkeule dann vorteilhaft zu einem größeren erfassten Bereich, sodass entweder wieder andere Schallquellen verstärkt wahrgenommen werden oder eine sich bewegende Schallquelle nicht verloren geht oder sogar verfolgt wird.

Die Hörvorrichtung ist vorzugsweise zur Verwendung bei einem Anwender mit eingeschränkter Hörfähigkeit ausgebildet, beispielsweise bei einem Anwender mit einem Gehörschaden. Eine solche Hörvorrichtung nimmt dann insbesondere Schall aus der Umgebung des Anwenders auf, um diesen modifiziert und insbesondere verstärkt an den Anwender auszugeben und auf diese Weise die eingeschränkte Hörfähigkeit zumindest teilweise zu kompensieren. Dazu wandeln die Mikrofone den Schall in geeignete Audiosignale um, welche dann von einer Signalverarbeitungseinheit verarbeitet, d.h. modifiziert werden und vom Hörer wieder in akustische Signale, d.h. Schall umgewandelt werden. Die Signalverarbeitungseinheit ist zweckmäßigerweise mit der Steuereinheit derart verbunden, dass die von der Steuereinheit ermittelte Orientierung an die Signalverarbeitungseinheit weitergegeben wird, um dort den Betriebsparameter einzustellen. In einer Variante ist die Signalverarbeitungseinheit ein Teil der Steuereinheit.

Nachfolgend wird ein Ausführungsbeispiel anhand einer Zeichnung näher erläutert. Darin zeigen jeweils schematisch:
- Fig. 1: eine Hörvorrichtung, die von einem Anwender getragen wird,
- Fig. 2: die Situation aus Fig. 1, mit dem Kopf in einer anderen Orientierung,
- Fig. 3a: einen rechten Beschleunigungssensor der Hörvorrichtung aus Fig. 2,
- Fig. 3b: einen linken Beschleunigungssensor der Hörvorrichtung aus Fig. 2,
- Fig. 4: ein Hörgerät der Hörvorrichtung aus Fig. 1, und
- Fig. 5: die Situation aus Fig. 1, mit einer Richtkeule der Hörvorrichtung.

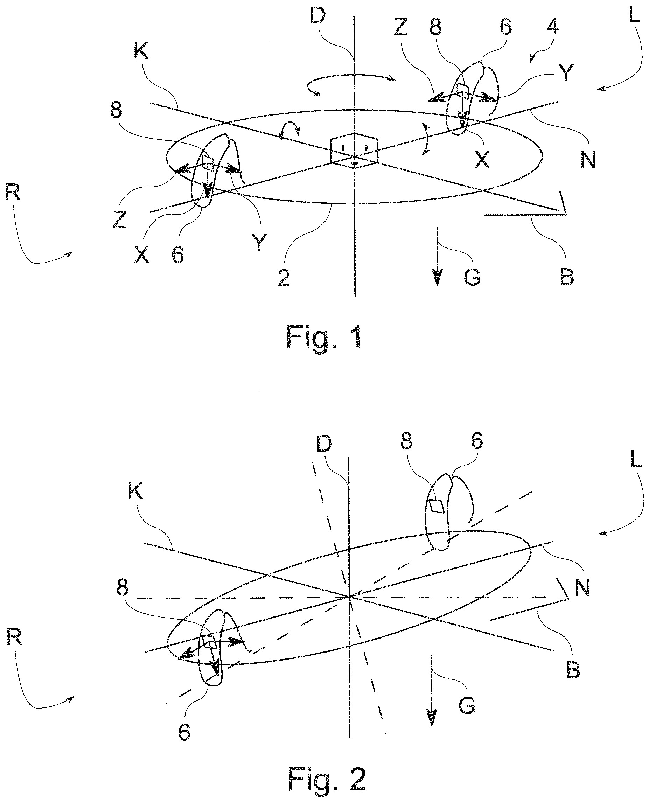

Fig. 1 zeigt in einer perspektivischen Ansicht und stark schematisiert den Kopf 2 eines nicht näher gezeigten Anwenders, welcher an seinem Kopf 2 eine Hörvorrichtung 4 trägt, die in dem gezeigten Ausführungsbeispiel als binaurale Hörvorrichtung 4 ausgebildet ist. Diese weist entsprechend zwei Hörgeräte 6 auf, die auf einer linken Seite L und einer rechten Seite R des Kopfes 2 angeordnet sind. Dabei ist der Kopf 2 relativ zur Erdbeschleunigung G und insbesondere auch relativ zum Rest des nicht dargestellten Körpers des Anwenders in einer bestimmten Orientierung ausgerichtet, welche insbesondere durch drei Winkel beschrieben wird, nämlich einen Drehwinkel, welcher eine Links-rechts-Drehung des Kopfes 2 um eine Drehachse D beschreibt, einen Kippwinkel, welcher eine seitliche Neigung, auch Links-rechts-Kippen des Kopfes 2 um eine Kippachse K beschreibt und einen Nickwinkel, welcher ein Vor-zurück-Nicken des Kopfes 2 um eine Nickachse N beschreibt. Weiterhin ist in Fig. 1 auch die Blickrichtung B des Anwenders gezeigt, welche in Richtung der Kippachse K weist. In der in Fig. 1 gezeigten Orientierung betragen alle drei Winkel jeweils 0°, d.h. der Anwender schaut geradeaus nach vorn.

Zur Ermittlung der Orientierung weist die Hörvorrichtung 4 zwei Beschleunigungssensoren 8 auf. Diese sind hier als translatorische Beschleunigungssensoren 8 ausgebildet, zur Detektion von translatorischen Beschleunigungen in drei zueinander senkrechten Richtungen X, Y, Z, wobei beispielsweise eine Drehung um die Drehachse D eine radiale Beschleunigung in Richtung Z und eine tangentiale Beschleunigung in Richtung Y hervorruft. Die drei Richtungen X, Y, Z, bilden jeweils ein Bezugssystem des jeweiligen Beschleunigungssensors 8, welches insbesondere konstruktiv vorgegeben ist. Jeweils ein Beschleunigungssensor 8 ist in einem der Hörgeräte 6 untergebracht.

Aus Fig. 1 wird deutlich, dass in der dort dargestellten speziellen Situation eine Messung der Beschleunigung in Richtung Y und Z unabhängig von der Erdbeschleunigung G ist, da diese senkrecht zu den Richtungen Y und Z verläuft. Dies stellt jedoch lediglich einen Spezialfall dar. Wesentlich häufiger dürfte eine Situation ähnlich der in Fig. 2 gezeigten Situation vorliegen, in welcher der Kopf 2 in einer anderen Orientierung ausgerichtet ist, d.h. bezüglich der Drehachse D verdreht, bezüglich der Kippachse K verkippt und/oder bezüglich der Nickachse N geneigt. Entsprechend sind auch die Beschleunigungssensoren 8 orientiert. Eine Messung der Beschleunigung in den Richtungen X, Y und/oder Z enthält dann üblicherweise eine Komponente, die von der Erdbeschleunigung G abhängig ist, d.h. ein von dem jeweiligen Beschleunigungssensor 8 ausgegebenes Sensorsignal enthält einen erdbeschleunigungsabhängigen Signalanteil.

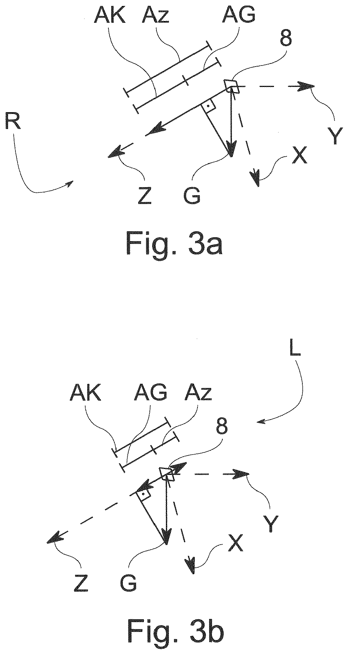

Zur Verdeutlichung zeigen die Fig. 3a und 3b jeweils einen der beiden Beschleunigungssensoren 8 aus Fig. 2 sowie die Richtungen X, Y, und Z entlang derer eine Messung von translatorischen Beschleunigungen erfolgt. Dabei ist der in Fig. 3a gezeigte Beschleunigungssensor 8 auf der rechten Seite R des Kopfes 2 angeordnet und gibt ein rechtes Sensorsignal aus, der Beschleunigungssensor 8 in Fig. 3b ist dagegen auf der linken Seite L des Kopfes 2 angeordnet und gibt ein linkes Sensorsignal aus. Am Beispiel einer Messung einer Beschleunigung Az in der jeweiligen Richtung Z wird deutlich, dass die Erdbeschleunigung G einen Anteil AG in Richtung Z erzeugt, welcher in Fig. 3a gemeinsam mit einem Anteil AK, welcher durch die tatsächliche Bewegung des Kopfes 2 verursacht wird, die Beschleunigung Az bildet. Ein auf Basis dieser Beschleunigung Az gebildetes Sensorsignal enthält entsprechend dem Anteil AG einen erdbeschleunigungsabhängigen Signalanteil und entsprechend dem Anteil AK einen Nutzanteil. In den Fig. 3a und 3b ist der Anteil AK stark übertrieben dargestellt; üblicherweise ist der erdbeschleunigungsabhängige Anteil AG deutlich größer und erschwert auf diese Weise eine genaue Bestimmung der Orientierung auf Basis lediglich eines Sensorsignals erheblich.

Aus Fig. 3b wird dagegen deutlich, dass auf der linken Seite L der Anteil AK gerade entgegen dem erdbeschleunigungsabhängigen Anteil AG wirkt und somit in Summe zu einer anderen Beschleunigung Az führt. Der Anteil AG wirkt jedoch für beide Beschleunigungssensoren 8 in die gleiche Richtung, sodass durch Differenzbildung der beiden Sensorsignale in einem aus dieser Operation resultierenden Gesamtsignal die beiden erdbeschleunigungsabhängigen Anteile AG eliminiert werden und die beiden Anteile AK entsprechend addiert werden. Auf diese Weise wird aus den beiden Sensorsignalen, die sich aus den gemessenen Beschleunigungen Az ergeben, ein Gesamtsignal gebildet, welches unabhängig von der Erdbeschleunigung G ist.

Die beiden Beschleunigungssensoren 8 der Fig. 3a und 3b sind relativ zueinander zunächst ohne Schieflage angeordnet. Diese ideale Situation ist jedoch üblicherweise nicht gegeben. Vielmehr bilden die Richtungen X, Y, Z für den jeweiligen Beschleunigungssensor ein jeweiliges Bezugssystem und die beiden Bezugssysteme dürften regelmäßig gerade nicht übereinstimmen. Die Anteile AG und somit die zugehörigen erdbeschleunigungsabhängigen Signalanteile in den Sensorsignalen der beiden Beschleunigungssensoren 8 sind dann unterschiedlich, trotz an sich gleicher Erdbeschleunigung G.

Eine solche relative Schieflage der Beschleunigungssensoren 8 zueinander und somit auch der Bezugssysteme wird dann in einer Ausführungsform dadurch kompensiert, dass eines der Sensorsignale über eine mathematische Operation, insbesondere eine Transformation mit einer Rotationsmatrix in das Bezugssystem des anderen Beschleunigungssensors 8 transformiert wird. Zur Bestimmung der Rotationsmatrix, genauer gesagt deren Matrixparameter, aber auch allgemein zur Kompensation der Schieflage, wird eine Eichmessung durchgeführt. Dazu wird zunächst ein Langzeitmittelwert des jeweiligen Sensorsignals ermittelt. Bei einer Mittelwertbildung über einen hinreichend langen Zeitraum ist das Sensorsignal im Wesentlichen durch die Erdbeschleunigung G bestimmt, sodass dann anhand des Langzeitmittelwerts die Richtung der Erdbeschleunigung G als gemeinsame Bezugsrichtung ermittelt wird. Zur Kompensation der Schieflage wird dann zunächst die individuelle Schieflage eines jeweiligen Beschleunigungssensors 8 relativ zur Erdbeschleunigung G ermittelt, um anschließend die beiden individuellen Schieflagen zur Bestimmung der Schieflage der beiden Beschleunigungssensoren 8 zueinander zu verwenden.

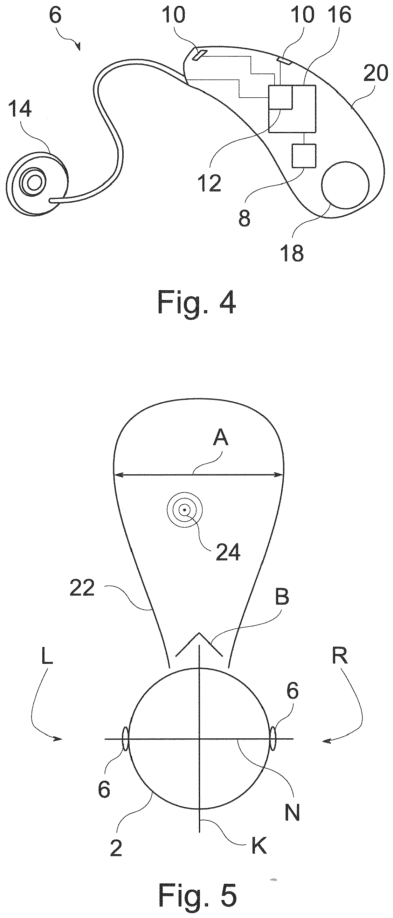

In Fig. 4 ist eines der Hörgeräte 6 der Hörvorrichtung 4 gezeigt. Das Hörgerät 6 ist hier als BTE-Gerät ausgebildet, grundsätzlich sind aber auch andere Hörgerätetypen denkbar, wie beispielsweise ITE-Geräte, die dann im Ohr getragen werden. Das Hörgerät 6 weist in dem hier gezeigten Ausführungsbeispiel zwei Mikrofone 10 auf, zur Aufnahme von Schall aus der Umgebung des Anwenders. Die Mikrofone 10 sind mit einer Signalverarbeitungseinheit 12 verbunden, welche zur Modifikation und insbesondere Verstärkung des aufgenommenen Schalls dient. Der modifizierte Schall wird dann über einen Hörer 14 ausgegeben, welcher hierzu ebenfalls mit der Signalverarbeitungseinheit 12 verbunden ist. Die Signalverarbeitungseinheit 12 ist zudem ein Teil einer Steuereinheit 16, an welche weiterhin der Beschleunigungssensor 8 angeschlossen ist. Das Hörgerät 6 wird weiterhin über eine Batterie 18 mit Energie versorgt. Die Steuereinheit 16, die Signalverarbeitungseinheit 12 die Batterie 18, der Beschleunigungssensor 8 und die Mikrofone 10 sind in einem Gehäuse 20 des Hörgeräts 6 angeordnet, wobei das Gehäuse 20 in der hier gezeigten Ausführungsform des Hörgeräts 6 als BTE-Gerät dann hinter dem Ohr getragen wird. Der Hörer 14 ist über eine nicht näher bezeichnete Verbindung an das Gehäuse 20 angeschlossen und wird in das Ohr eingesetzt.

Die hier gezeigte Hörvorrichtung weist zudem eine Richtcharakteristik auf. Zur Verdeutlichung ist in Fig. 5 die Hörvorrichtung 4 aus Fig. 2 in einer Draufsicht dargestellt sowie eine Richtkeule 22 dieser Hörvorrichtung 4, zur selektiven und gerichteten Aufnahme von Schall einer bestimmten Schallquelle 24, die hier vor dem Anwender angeordnet ist. Dabei weist die Richtkeule 22 eine Abmessung A auf, die hier eine Breite ist und insbesondere angibt, aus welchem Bereich vor dem Anwender aufgenommener Schall mittels der Hörvorrichtung 4 gezielt hervorgehoben werden sollen. Durch Ermitteln der Orientierung des Kopfes 2 wird dann in der hier gezeigten Variante diese Abmessung A als ein Betriebsparameter der Hörvorrichtung 4 optimal eingestellt. Dazu wird insbesondere regelmäßig die Orientierung ermittelt und in diesem Sinne überwacht, um eine Änderung der Orientierung festzustellen. Ändert sich die Orientierung über einen vorgegebenen Zeitraum von beispielsweise mehreren Sekunden nicht, wird davon ausgegangen, dass der Anwender seine Aufmerksamkeit auf die Schallquelle 24 fokussieren möchte und andere Schallquellen möglichst ausblenden möchte. Daher wird dann in diesem Fall die Abmessung A verringert, um die Richtkeule 22 möglichst ausschließlich auf die Schallquelle 24 auszurichten. Bewegt der Anwender jedoch den Kopf 2, so wird die Abmessung A wieder vergrößert, um entsprechend andere Schallquellen zu erfassen oder auch der sich möglicherweise aus der Richtkeule 22 herausbewegenden Schallquelle 24 zu folgen. In einer nicht gezeigten Variante wird alternativ oder zusätzlich auch eine Ausrichtung der Richtkeule 22 bezüglich der Blickrichtung B in Abhängigkeit der Orientierung des Kopfes 2 eingestellt.

### Bezugszeichenliste

- 2: Kopf
- 4: Hörvorrichtung
- 6: Hörgerät
- 8: Beschleunigungssensor
- 10: Mikrofon
- 12: Signalverarbeitungseinheit
- 14: Hörer
- 16: Steuereinheit
- 18: Batterie
- 20: Gehäuse
- 22: Richtkeule
- 24: Schallquelle

- A: Abmessung
- Az: Beschleunigung
- AG: Anteil, erdbeschleunigungsabhängiger Anteil
- AK: Anteil, Nutzanteil
- B: Blickrichtung
- D: Drehachse
- G: Erdbeschleunigung
- K: Kippachse
- L: linke Seite
- N: Nickachse
- R: rechte Seite
- X, Y, Z: Richtung

## Patentansprüche

1. Verfahren zum Betrieb einer binauralen Hörvorrichtung (4), mit zwei Hörgeräten (6), nämlich mit einem linken und einem rechten Hörgerät (6), zum Tragen auf unterschiedlichen Seiten (R, L) des Kopfes (2), wobei die Hörvorrichtung (4) zwei translatorische Beschleunigungssensoren (8) aufweist, jeweils zur Messung einer Beschleunigung in einem kartesischen Koordinatensystem mit drei Achsen, wobei die Beschleunigungssensoren (8) jeweils ein Sensorsignal bereitstellen und mittels derer eine Orientierung des Kopfes (2) eines Anwenders ermittelt wird,
- wobei jeweils einer der beiden Beschleunigungssensoren (8) in oder an jeweils einem der beiden Hörgeräte (6) angebracht ist, sodass die beiden Sensorsignale als ein linkes und ein rechtes Sensorsignal bereitgestellt werden,
- wobei zur Ermittlung der Orientierung die Sensorsignale beider Beschleunigungssensoren (8) kombiniert verwendet werden,
- wobei die beiden Sensorsignale durch eine mathematische Operation zu einem Gesamtsignal kombiniert werden, mittels dessen die Orientierung des Kopfes (2) ermittelt wird,
- wobei die beiden Sensorsignale jeweils einen Erdbeschleunigungsanteil aufweisen und derart zum Gesamtsignal kombiniert werden, dass die Erdbeschleunigungsanteile eliminiert werden und das Gesamtsignal unabhängig von der Erdbeschleunigung (G) ist,
- wobei in Abhängigkeit der Orientierung ein Betriebsparameter der Hörvorrichtung (4) eingestellt wird.

2. Verfahren nach dem vorhergehenden Anspruch, wobei eine Schieflage der Beschleunigungssensoren (8) zueinander kompensiert wird.

3. Verfahren nach dem vorhergehenden Anspruch, wobei die Schieflage kompensiert wird, indem zumindest eines der Sensorsignale zusätzlich transformiert wird.

4. Verfahren nach einem der beiden vorhergehenden Ansprüche, wobei zur Kompensation der Schieflage eine Eichmessung durchgeführt wird, bei welcher ein Langzeitmittelwert des jeweiligen Sensorsignals ermittelt wird.

5. Verfahren nach einem der vorhergehenden Ansprüche, wobei die Hörvorrichtung (4) eine Richtkeule (22) aufweist, zur gerichteten Aufnahme von Schall mittels einer Anzahl von Mikrofonen (10), und dass der Betriebsparameter eine Abmessung (A) oder Ausrichtung der Richtkeule (22) ist.

6. Verfahren nach dem vorhergehenden Anspruch, wobei der Betriebsparameter eine Abmessung (A) der Richtkeule (22) ist, insbesondere eine Breite, und diese Abmessung (A) reduziert wird, falls der Anwender während eines vorgegebenen Zeitintervalls die Orientierung seines Kopfes (2) nicht ändert.

7. Verfahren nach einem der beiden vorhergehenden Ansprüche, wobei der Betriebsparameter eine Abmessung (A) der Richtkeule (22) ist, insbesondere eine Breite, und die Abmessung (A) vergrößert wird, falls der Anwender die Orientierung seines Kopfes (2) ändert.

8. Verfahren nach einem der vorhergehenden Ansprüche, wobei die Hörvorrichtung (4) als Hörhilfesystem ausgebildet ist, mit zumindest einem Hörer und mit einer Signalverarbeitungseinheit (12), mittels welcher der aufgenommene Schall vor einer Ausgabe mittels des Hörers modifiziert, insbesondere verstärkt wird.

9. Binaurale Hörvorrichtung (4), die zum Betrieb mittels eines Verfahrens nach einem der vorhergehenden Ansprüche ausgebildet ist, mit zwei Hörgeräten (6), nämlich mit einem linken und einem rechten Hörgerät (6), zum Tragen auf unterschiedlichen Seiten des Kopfes (2) eines Anwenders, mit zwei Beschleunigungssensoren (8), wobei jeweils einer der beiden Beschleunigungssensoren (8) in oder an jeweils einem der beiden Hörgeräte (6) angebracht ist, wobei die Beschleunigungssensoren (8) jeweils ein Sensorsignal bereitstellen und zur Bestimmung einer Orientierung des Kopfes (2) dienen und mit einer Steuereinheit (12), zum Einstellen zumindest eines Betriebsparameters der Hörvorrichtung (4), wobei die Steuereinheit (12) derart ausgebildet ist,
- dass die beiden Sensorsignale durch eine mathematische Operation zu einem Gesamtsignal kombiniert werden, mittels dessen die Orientierung des Kopfes (2) ermittelt wird,
- dass die beiden Sensorsignale jeweils einen Erdbeschleunigungsanteil aufweisen und derart zum Gesamtsignal kombiniert werden, dass die Erdbeschleunigungsanteile eliminiert werden und das Gesamtsignal unabhängig von der Erdbeschleunigung (G) ist und
- dass der Betriebsparameter in Abhängigkeit der Orientierung eingestellt wird.

## Claims

1. Method for operating a binaural hearing device (4), comprising two hearing aids (6), i.e. a left hearing aid (6) and a right hearing aid (6), to be worn on different sides (R, L) of the head (2), wherein the hearing device (4) comprises two translational acceleration sensors (8), in each case for measuring an acceleration in a Cartesian coordinate system comprising three axes, wherein the acceleration sensors (8) each provide a sensor signal and by means of which an orientation of the head (2) of a user is established,
- wherein one of the two acceleration sensors (8) is in each case attached in or to one of the two hearing aids (6) in each case such that the two sensor signals are provided as a left sensor signal and a right sensor signal,
- wherein the sensor signals of both acceleration sensors (8) are used in combination for establishing the orientation,
- wherein the two sensor signals are combined by a mathematical operation to form an overall signal, by means of which the orientation of the head (2) is established,
- wherein the two sensor signals each have a gravitational acceleration component and are combined to form the overall signal in such a way that the gravitational acceleration components are eliminated and the overall signal is independent of gravitational acceleration (G),
- wherein an operating parameter of the hearing device (4) is set depending on the orientation.

2. Method according to the preceding claim wherein a skew position of the acceleration sensors (8) in respect of one another is compensated for.

3. Method according to the preceding claim, wherein the skew position is compensated for by virtue of at least one of the sensor signals being additionally transformed.

4. Method according to one of the two preceding claims, wherein a calibration measurement is carried out for compensating the skew position, with a long-term mean of the respective sensor signal being established in said calibration measurement.

5. Method according to one of the preceding claims, wherein the hearing device (4) has a directional lobe (22) for the directed recording of sound by means of a number of microphones (10), and in that the operating parameter is a dimension (A) or alignment of the directional lobe (22).

6. Method according to the preceding claim wherein the operating parameter is a dimension (A) of the directional lobe (22), in particular a width, and this dimension (A) is reduced if the user does not change the orientation of his head (2) during a predetermined time interval.

7. Method according to one of the two preceding claims, wherein the operating parameter is a dimension (A) of the directional lobe (22), in particular a width, and the dimension (A) is increased if the user changes the orientation of his head (2).

8. Method according to one of the preceding claims wherein the hearing device (4) is embodied as a hearing aid system, comprising at least one receiver and comprising a signal processing unit (12), by means of which the recorded sound is modified, in particular amplified, prior to an output by means of the receiver.

9. Binaural hearing device (4) embodied for operation by means of a method according to one of the preceding claims, comprising two hearing aids (6), i.e. a left hearing aid (6) and a right hearing aid (6), to be worn on different sides of the head (2) of a user, comprising two acceleration sensors (8), wherein one of the two acceleration sensors (8) is in each case attached in or to one of the two hearing aids (6) in each case, wherein the acceleration sensors (8) each provide a sensor signal and serve to determine an orientation of the head (2), and comprising a control unit (12) for setting at least one operating parameter of the hearing device (4), wherein the control unit (12) is embodied in such a way
- that the two sensor signals are combined by a mathematical operation to form an overall signal, by means of which the orientation of the head (2) is established,
- that the two sensor signals each have a gravitational acceleration component and are combined to form the overall signal in such a way that the gravitational acceleration components are eliminated and the overall signal is independent of gravitational acceleration (G), and
- that the operating parameter is set depending on the orientation.

## Revendications

1. Procédé pour faire fonctionner un dispositif d'audition (4) binaural, comprenant deux appareils auditifs (6), à savoir un appareil auditif (6) gauche et un droit, à porter sur des côtés (R, L) différents de la tête (2), le dispositif d'audition (4) possédant deux capteurs d'accélération (8) translatoires, servant respectivement à mesurer une accélération dans un système de coordonnées cartésiennes à trois axes, les capteurs d'accélération (8) délivrant respectivement un signal de capteur et une orientation de la tête (2) d'un utilisateur étant déterminée au moyen de ceux-ci,
- l'un des deux capteurs d'accélération (8) étant respectivement monté dans ou sur respectivement l'un des deux appareils auditifs (6), de sorte que les deux signaux de capteur sont délivrés sous la forme d'un signal de capteur de gauche et d'un signal de capteur de droite,
- les signaux de capteur des deux capteurs d'accélération (8) étant utilisés de façon combinée en vue de déterminer l'orientation,
- les deux signaux de capteur étant combinés par une opération mathématique en un signal total au moyen duquel est déterminée l'orientation de la tête (2),
- les deux signaux de capteur possédant respectivement une composante d'accélération due à la gravité et étant combinés en le signal total de telle sorte que les composantes d'accélération due à la gravité sont éliminées et le signal total est indépendant de la gravité (G),
- un paramètre de fonctionnement du dispositif d'audition (4) étant réglé en fonction de l'orientation.

2. Procédé selon la revendication précédente, une position oblique des capteurs d'accélération (8) l'un par rapport à l'autre étant compensée.

3. Procédé selon la revendication précédente, la position oblique étant compensée en effectuant en plus une transformée d'au moins l'un des signaux de capteur.

4. Procédé selon l'une des deux revendications précédentes, une mesure d'étalonnage étant effectuée en vue de compenser la position oblique, lors de laquelle est déterminée une valeur moyenne à long terme du signal de capteur respectif.

5. Procédé selon l'une des revendications précédentes, le dispositif d'audition (4) possédant un lobe directif (22) destiné à l'enregistrement dirigé du son au moyen d'une pluralité de microphones (10), et en ce que le paramètre de fonctionnement est une dimension (A) ou une orientation du lobe directif (22).

6. Procédé selon la revendication précédente, le paramètre de fonctionnement étant une dimension (A) du lobe directif (22), notamment une largeur, et cette dimension (A) étant réduite dans le cas où l'utilisateur ne modifie pas l'orientation de sa tête (2) pendant un intervalle de temps prédéfini.

7. Procédé selon l'une des deux revendications précédentes, le paramètre de fonctionnement étant une dimension (A) du lobe directif (22), notamment une largeur, et la dimension (A) étant augmentée dans le cas où l'utilisateur modifie l'orientation de sa tête (2) .

8. Procédé selon l'une des revendications précédentes, le dispositif d'audition (4) étant réalisé sous la forme d'un système de correction auditive, comprenant au moins un écouteur et comprenant une unité de traitement de signal (12) au moyen de laquelle le son enregistré est modifié, notamment amplifié, avant d'être émis au moyen de l'écouteur.

9. Dispositif d'audition (4) binaural qui est configuré pour fonctionner au moyen d'un procédé selon l'une des revendications précédentes, comprenant deux appareils auditifs (6), à savoir un appareil auditif (6) gauche et un droit, à porter sur des côtés différents de la tête (2) d'un utilisateur, comprenant deux capteurs d'accélération (8), l'un des deux capteurs d'accélération (8) étant respectivement montés dans ou sur respectivement l'un des deux appareils auditifs (6), les capteurs d'accélération (8) délivrant respectivement un signal de capteur et servant à déterminer une orientation de la tête (2), et comprenant une unité de commande (12) destinée à régler au moins un paramètre de fonctionnement du dispositif d'audition (4), l'unité de commande (12) étant configurée de telle sorte
- que les deux signaux de capteur sont combinés par une opération mathématique en un signal total au moyen duquel est déterminée l'orientation de la tête (2),
- que les deux signaux de capteur possèdent respectivement une composante d'accélération due à la gravité et sont combinés en le signal total de telle sorte que les composantes d'accélération due à la gravité sont éliminées et le signal total est indépendant de la gravité (G) et
- que le paramètre de fonctionnement est réglé en fonction de l'orientation.
